# EUROPÄISCHE PATENTSCHRIFT

(11) **EP 2 195 910 B1**
(45) Veröffentlichungstag und Bekanntmachung des Hinweises auf die Patenterteilung: **15.05.2019**
(21) Anmeldenummer: 08801582.1
(22) Anmeldetag: 14.08.2008
(51) Int. Cl.: H02K 11/215, H02K 5/173

(54) **ELEKTROMOTOR MIT WINKELSENSOR**
ELECTRIC MOTOR COMPRISING AN ANGLE SENSOR
MOTEUR ÉLECTRIQUE À CAPTEUR ANGULAIRE

(30) Priorität: 28.08.2007 DE 102007040751
(43) Veröffentlichungstag der Anmeldung: 16.06.2010
(73) Patentinhaber: SEW-EURODRIVE GmbH & Co. KG, 76646 Bruchsal (DE)
(72) Erfinder: MAHLEIN, Jochen, 76139 Karlsruhe (DE); LEICHTER, Thomas, 76187 Karlsruhe (DE); HAUCK, Matthias, 68723 Schwetzingen (DE); HÜBERS, Christian, 47533 Kleve (DE)
(74) Vertreter: Tüngler, Eberhard
(86) Internationale Anmeldenummer: PCT/EP2008/006687
(87) Internationale Veröffentlichungsnummer: WO 2009/030350

(56) Entgegenhaltungen:
- WO-A-03/094324
- DE-A1-102004 059 181
- DE-A1-102005 050 271
- JP-A- 4 299 045
- JP-A- 2002 199 771
- US-B2- 7 109 615

## Beschreibung

Die Erfindung betrifft einen Elektromotor mit Winkelsensor.

Winkelsensoren, die an die Rotorwelle als Anbaugeber angebaut werden, beispielsweise unter Verwendung einer Spreizwellenverbindung sind bekannt.

Aus der WO 03/094324 A2 ist ein Elektromotor mit Winkelsensor bekannt, wobei die Rotorwelle des Elektromotors über zumindest zwei Lager gelagert ist, wobei ein erstes Lager als Festlager ausgeführt ist, wobei an demjenigen Endabschnitt der Rotorwelle, welches näher am Festlager sitzt, ein Permanentmagnet vorgesehen ist,
wobei am Lagerschild des Festlagers eine Leiterplatte vorgesehen ist, auf der Sensoren vorgesehen sind zur Detektion des Magnetfeldes des Magneten,
wobei auf der Leiterplatte auch Signalelektronik zur Auswertung der Signale der Sensoren und Bestimmung der Winkelstellung der Rotorwelle und des Magneten angeordnet ist.

Der Erfindung liegt die Aufgabe zugrunde, einen Elektromotor mit Winkelsensor in einfacher Weise montierbar weiterzubilden.

Erfindungsgemäß wird die Aufgabe bei dem Elektromotor mit Winkelsensor nach den in Anspruch 1 angegebenen Merkmalen gelöst.

Von Vorteil ist dabei, dass einerseits die Festlagerseite verwendet wird und andererseits ein Messprinzip mit Dauermagnet verwendet wird. Somit wird ein Einstellen des axialen Abstandes unnötig.

Bei einer vorteilhaften Ausgestaltung ist ein zweites Lager als Loslager ausgeführt. Von Vorteil ist dabei, dass thermische Ausdehnungen an der anderen Seite der Rotorwelle kompensiert werden und somit die Festlagerseite im Wesentlichen unverändert belassen.

Bei einer vorteilhaften Ausgestaltung ist der Schwerpunkt des Magneten auf der mathematischen Achse der Rotorwelle vorgesehen. Von Vorteil ist dabei, dass die Unwucht verringert ist.

Bei einer vorteilhaften Ausgestaltung umfassen die Sensoren mindestens einen Hallsensor und/oder Wiegandsensor. Von Vorteil ist dabei, dass ein Detektieren des Magnetfeldes in einfacher Weise und in einem großen Arbeitsbereich ausführbar ist. Außerdem ist bei Verwendung von Wiegandsensoren, also Impulsdrahtsensoren, sogar eine elektrische Versorgung der Signalelektronik ausführbar aus den detektierten Signalen. Dabei ist es vorteilhaft Halbleiter in FRAM Technik auszuführen oder in entsprechenden Techniken mit niedrigen Verbrauchsleistungen.

Erfindungsgemäß ist der Magnet in einer Schraube vorgesehen, die in die Rotorwelle eingeschraubt ist, insbesondere gegen eine Distanzscheibe. Von Vorteil ist dabei, dass der Magnet in einfacher Weise fest und sicher verbindbar ist mit der Rotorwelle, die hierzu nur eine Gewindebohrung aufweisen muss.

Erfindungsgemäß ist die Leiterplatte von einem Federelement in Richtung auf die Rotorwelle gedrückt gehalten. Von Vorteil ist dabei, dass kein Justieren der Axiallage notwendig ist sondern die Fertigungstoleranz eines Bohrgrundes, eines Wulstes oder eines Absatzes genügt, um die axiale Positioniergenauigkeit zu erreichen.

Erfindungsgemäß ist die Leiterplatte gegen einen Distanzring, insbesondere einen auf einem Absatz oder Wulst aufliegenden Distanzring, oder einen Absatz oder Wulst des Lagerschildes gedrückt vorgesehen. Von Vorteil ist dabei, dass eine Positionierung in einfacher und kostengünstiger Weise ausführbar ist.

Bei einer vorteilhaften Ausgestaltung ist das Federelement an einem Sicherungsring, der im Lagerschild befestigt, abgestützt. Von Vorteil ist dabei, dass einfache Mittel zum Abstützen verwendbar sind und die Fertigungstoleranz von Normteilen genügt.

Bei einer vorteilhaften Ausgestaltung ist die Leiterplatte als Kreisscheibe ausgeführt. Von Vorteil ist dabei, dass eine kompakte Ausführung des Sensors mit zugehöriger Auswerteeinheit vorsehbar ist.

Bei einer vorteilhaften Ausgestaltung ist ein Randbereich der Leiterplatte unbestückt und ohne Leiterbahnen ausgeführt. Von Vorteil ist dabei, dass ein hoher Isolierabstand zwischen Lagerschild und Signalelektronik der Leiterplatte erreichbar ist.

Insbesondere ist am Rand der Leiterplatte ein derart großer Bereich unbestückt und ohne Leiterbahnen ausgeführt, dass die Signalelektronik auf einem Potential betreibbar ist, das zum Lagerschild eine Potentialdifferenz aufweist, die im Wesentlichen der Zwischenkreisspannung des netzgespeisten Umrichters entspricht, der den Elektromotor speist. Von Vorteil ist dabei, dass zwischen Signalelektronik und Winkelsensor keine galvanische Trennung notwendig ist.

Bei einer vorteilhaften Ausgestaltung sind keine Justiermittel vorgesehen, insbesondere keine Justiermittel zum Einstellen des axialen Abstandes zwischen Magnet und Leiterplatte. Von Vorteil ist dabei, dass einfach herstellbare Mittel, wie Absatz oder Bohrung und dergleichen, verwendbar sind und die axiale Positionierung mit diesen Mitteln im Rahmen der üblichen einfach erreichbaren Fertigungstoleranzen genau genug herstellbar ist. Allerdings ist es notwendig, das erfindungsgemäße Wirkprinzip zu verwenden. Denn durch die Verwendung des Magneten ist ein starkes Magnetfeld vorhanden, dessen Feldstärke zur sicheren und genauen Bestimmung des Winkels des Rotors ausreicht.

Bei einer vorteilhaften Ausgestaltung ist die Leiterplatte mit einem Zwischenringteil, insbesondere mit einem metallischen Zwischenringteil, verbunden, insbesondere verschraubt, insbesondere wobei die Leiterplatte in demjenigen Oberflächenbereich keine Leiterbahnen aufweist, an welchem das Zwischenringteil die Leiterplatte berührt. Von Vorteil ist dabei, dass die Leiterplatte in dem Berührbereich frei ätzbar ist und somit eine ausreichende elektrische Isolierung erzielbar ist zwischen dem Zwischenringteil und der elektronischen Schaltung, die auf der Leiterplatte vorgesehen ist. Vorzugsweise ist der Ring mittig zur Rotorachse orientiert. Auf diese Weise ist zwischen Sensor und Zwischenring ein großer Abstand durch entsprechend große Ausführung des Ringlochs erreichbar.

Bei einer vorteilhaften Ausgestaltung ist das Zwischenringteil mit dem Lagerschild des Elektromotors schraubverbunden. Von Vorteil ist dabei, dass die mit dem Zwischenringteil verbundene Leiterplatte am Motor festlegbar.

Bei einer vorteilhaften Ausgestaltung ist ein Gehäusedeckel mit dem Lagerschild des Elektromotors schraubverbindbar, das die Leiterplatte und Zwischenringteil gehäusebildend abdeckt gegen die Umgebung. Von Vorteil ist dabei, dass ein sicherer Schutz für die Elektronik in einfacher Weise erreichbar ist.

Bei einer vorteilhaften Ausgestaltung ist mittels der den radial ausgerichteten Magnet aufnehmenden Schraube auch ein Polrad mit der Rotorwelle verbunden, wobei am Umfang, insbesondere am äußeren Umfang, des Polrades abwechselnd orientierte Dauermagnete vorgesehen sind, deren Feld mit auf der Leiterplatte entsprechend angeordneten Sensoren, insbesondere Hallsensoren und/oder Wiegandsensoren, detektierbar ist. Von Vorteil ist dabei, dass mittels des Polrades ein Multiturngeber, also ein Absolutgeber herstellbar ist, der alle durchlaufenen Umdrehungen erfasst, also die absolute Zahl der Umdrehungen und mittels des in der Schraube vorgesehenen Dauermagneten eine weitere Information zur Winkellage, insbesondere fein aufgelöst. Vorzugsweise ist das Polrad mittels einer mit der den radial ausgerichteten Dauermagneten aufnehmenden Schraube zusammenwirkenden Kontermutter gehalten.

Bei einer vorteilhaften Ausgestaltung ist zwischen Sensor und drehbar gelagertem Dauermagnet eine Isolierfolie, insbesondere Polyester, Polyamid-Folie, NOMEX-Folie oder dergleichen, zur Erhöhung des Isolierabstandes vorgesehen, insbesondere wobei die Folie zusammen mit dem Sensor und der Leiterplatte umspritzt ist. Somit ist die Elektronik auf Zwischenkreispotential legbar. Trotz des kleinen Luftspaltes zwischen drehbar gelagertem Magnet und Sensor ist ein Spannungsdurchschlag unterbunden.

Die Erfindung wird nun anhand von Abbildungen näher erläutert:

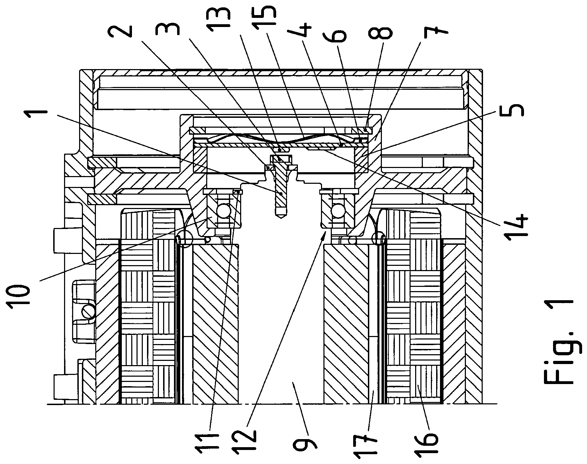

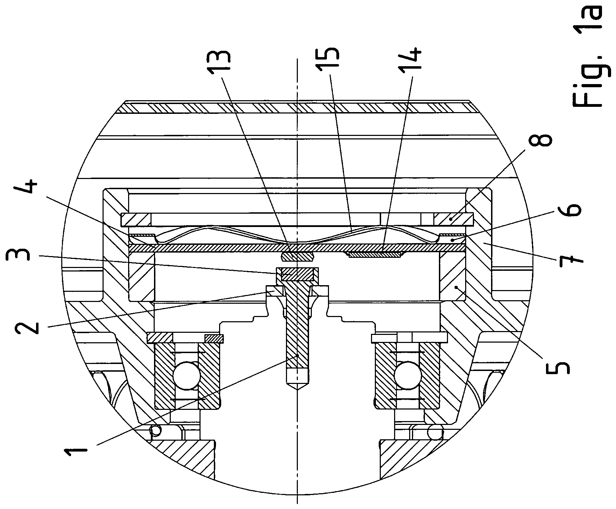

In der Figur 1 ist ein Teil eines erfindungsgemäßen Antriebs, umfassend zumindest einen Elektromotor, in Schnittansicht gezeichnet. In Figur 1a ist ein vergrößerter Ausschnitt gezeigt.

In das axiale Ende einer Rotorwelle 9 ist eine Schraube 1 eingeschraubt, in deren axiales Ende, insbesondere also in den Schraubenkopf, ein Permanentmagnet eingeklebt ist. Die Magnetisierungsrichtung des Magneten ist in radialer Richtung vorgesehen, wobei der Schwerpunkt des Magneten vorzugsweise auf der gedachten mathematischen Achse der Rotorwelle vorgesehen ist.

Die Rotorwelle ist zumindest mit zwei Lagern gelagert, wobei das der Schraube nächstliegende und in den Figuren gezeigte Lager 10 als Festlager ausgeführt ist. Am anderen axialen Ende der Rotorwelle ist ein Loslager vorgesehen zur Kompensation thermisch bedingter Ausdehnungen.

Zur Bildung des Festlagers ist der Innenring des Lagers 10 zwischen einem Wulst 12 und einem Sicherungsring 11 gehalten. Der Außenring des Lagers 10 ist in entsprechender Weise fixiert.

Auf der Rotorwelle 9 sind Magnete 17 vorgesehen, die mit der Statorwicklung 16 zusammen einen Synchronmotor bilden.

Im Lagerschild 7 ist eine Bohrung eingebracht in welche ein Distanzring 5 eingelegt ist. Axial darauf folgend ist eine Leiterplatte 4 eingelegt, die von dem axial darauf folgenden Federelement 15, das sich am Sicherungsring 8 abstützt, in Richtung des Distanzrings 5 gedrückt wird.

In weiteren erfindungsgemäßen Ausführungsbeispielen wird kein Distanzring 5 verwendet sondern die Leiterplatte 4 direkt auf den Absatz des Lagerschildes 7 gedrückt.

Mit der Distanzscheibe 2 wird die Schraube 1 axial festgelegt und positioniert.

Dem Magneten gegenüber stehend ist auf der Leiterplatte 4 als Sensoren umfassendes Bauelement 13 ein integrierter Schaltkreis ausgeführt. Dabei sind vorzugsweise vier HallSensoren in dem Gehäuse des Schaltkreises angeordnet, insbesondere in einer Radialebene, also auf einer selben axialen Position. Mit den Sensoren ist eine Detektion der Winkelstellung des Magneten 3 ermöglicht.

Die Leiterplatte ist auch mit Bauelementen 14 bestückt, die als Signalelektronik vorgesehen sind zur Auswertung der Signale der Sensoren und zur Bestimmung des Winkels des Magneten und somit der Rotorwelle.

Außerdem ist bei weiteren erfindungsgemäßen Ausführungsbeispielen die Leiterplatte mit mindestens einem Wiegandsensor bestückt, um die Signalelektronik mit elektrischer Leistung zu versorgen. In Weiterbildung sind auch mehrere Wiegandsensoren vorsehbar, die nicht nur die Versorgung der Signalelektronik sondern auch die Winkeldetektion ermöglichen. Hierzu sind die Wiegandsensoren dann radial orientiert vorgesehen.

Vorzugsweise ist die Signal- und die Speicherelektronik in FRAM Technik ausgeführt und somit mit geringstem Energieverbrauch.

Die Leiterplatte samt Bauelementen wird mit Kunststoff umspritzt und ist somit vor Staub, Feuchtigkeit und bei der Montage gegen Beschädigungen geschützt. Außerdem ist das Handling einfach und zerstörende elektrische Spannungen sind ferngehalten.

Darüber hinaus ist die Leiterplatte als Kreisscheibe ausgeführt und an ihrem Rand derart breit ohne Leiterbahnen und Bauelemente ausgeführt, so dass ein hoher Isolierabstand eingehalten ist zur auf Masse liegendem Lagerschild. Somit ist die Signalelektronik auf Zwischenkreisspannung betreibbar.

### Bezugszeichenliste

1 Schraube
2 Distanzscheibe
3 Permanentmagnet
4 Leiterplatte
5 Distanzring
6 Ausgleichsscheibe
7 Gehäuseteil, insbesondere Lagerschild
8 Sicherungsring
9 Rotorwelle
10 Lager
11 Sicherungsring
12 Wulst
13 Bauelement, umfassend Sensoren
14 elektronisches Bauelement
15 Federelement
16 Statorwicklung

## Patentansprüche

1. Elektromotor mit Winkelsensor,
wobei die Rotorwelle des Elektromotors über zumindest zwei Lager gelagert ist,
**wobei** ein erstes Lager als Festlager ausgeführt ist,
wobei an demjenigen axialen Ende der Rotorwelle, welches näher am Festlager sitzt, ein radial orientierter Permanentmagnet (3) vorgesehen ist,
wobei am Lagerschild des Festlagers eine Leiterplatte (4) vorgesehen ist, auf der Sensoren vorgesehen sind zur Detektion des Magnetfeldes des Magneten,
wobei auf der Leiterplatte (4) auch Signalelektronik zur Auswertung der Signale der Sensoren und Bestimmung der Winkelstellung der Rotorwelle und des Magneten angeordnet ist,
**wobei der Magnet in einer Schraube (1) vorgesehen ist, die in die Rotorwelle eingeschraubt ist,**
**wobei die Leiterplatte (4) von einem Federelement (15) in Richtung auf die Rotorwelle gedrückt gehalten ist, wobei die Leiterplatte (4) gegen einen Distanzring (5), insbesondere einen auf einem Absatz oder Wulst (12) aufliegenden Distanzring (5), oder einen Absatz oder Wulst (12) des Lagerschildes gedrückt vorgesehen ist,**
**wobei das Federelement (15) an einem Sicherungsring (8), der im Lagerschild befestigt ist, abgestützt ist.**

2. Elektromotor nach Anspruch 1,
**dadurch gekennzeichnet, dass**
ein zweites Lager als Loslager ausgeführt ist.

3. Elektromotor nach mindestens einem der vorangegangenen Ansprüche,
**dadurch gekennzeichnet, dass**
der Schwerpunkt des Magneten auf der mathematischen Achse der Rotorwelle vorgesehen ist.

4. Elektromotor nach mindestens einem der vorangegangenen Ansprüche,
**dadurch gekennzeichnet, dass**
die Sensoren mindestens einen Hallsensor und/oder Wiegandsensor umfassen.

5. Elektromotor nach Anspruch 4,
**dadurch gekennzeichnet, dass**
**die in die Rotorwelle eingeschraubte Schraube (1), in welcher der Magnet vorgesehen ist gegen eine Distanzscheibe (2) mit einer Kontermutter fixiert ist zum Einstellen und Festlegen des Abstandes zwischen Magnet und Hallsensor und/oder Wiegandsensor.**

6. Elektromotor nach mindestens einem der vorangegangenen Ansprüche,
**dadurch gekennzeichnet, dass**
**die Schraube (1) eine Kunststoffschraube oder Stahlschraube ist.**

7. Elektromotor nach mindestens einem der vorangegangenen Ansprüche,
**dadurch gekennzeichnet, dass**
die Leiterplatte (4) als Kreisscheibe ausgeführt ist.

8. Elektromotor nach mindestens einem der vorangegangenen Ansprüche,
**dadurch gekennzeichnet, dass**
ein Randbereich der Leiterplatte (4) unbestückt und ohne Leiterbahnen ausgeführt ist zur Erreichung eines hohen Isolierabstandes zwischen Lagerschild und Signalelektronik der Leiterplatte (4).

9. Elektromotor nach mindestens einem der vorangegangenen Ansprüche,
**dadurch gekennzeichnet, dass**
am Rand der Leiterplatte (4) ein derart großer Bereich unbestückt und ohne Leiterbahnen ausgeführt ist, dass die Signalelektronik auf einem Potential betreibbar ist, das zum Lagerschild eine Potentialdifferenz aufweist, die im Wesentlichen der Zwischenkreisspannung des netzgespeisten Umrichters entspricht, der den Elektromotor speist.

10. Elektromotor nach mindestens einem der vorangegangenen Ansprüche,
**dadurch gekennzeichnet, dass**
die Leiterplatte (4) mit einem Zwischenringteil, insbesondere mit einem metallischen Zwischenteil, verbunden ist, insbesondere verschraubt ist, insbesondere wobei die Leiterplatte (4) in demjenigen Oberflächenbereich keine Leiterbahnen aufweist, an welchem das Zwischenringteil die Leiterplatte (4) berührt.

11. Elektromotor nach Anspruch 10,
**dadurch gekennzeichnet, dass**
das Zwischenringteil mit dem Lagerschild des Elektromotors schraubverbunden ist.

12. Elektromotor nach Anspruch 10 oder 11,
**dadurch gekennzeichnet, dass**
ein Gehäusedeckel mit dem Lagerschild des Elektromotors schraubverbindbar ist, das die Leiterplatte (4) und Zwischenringteil gehäusebildend abdeckt gegen die Umgebung.

13. Elektromotor nach mindestens einem der vorangegangenen Ansprüche,
**dadurch gekennzeichnet, dass**
zwischen Sensor und drehbar gelagertem Dauermagnet eine Isolierfolie, insbesondere Polyester, Polyamid-Folie oder dergleichen, zur Erhöhung des Isolierabstandes vorgesehen ist.

14. Elektromotor nach Anspruch 13,
**dadurch gekennzeichnet, dass**
die Folie zusammen mit dem Sensor und der Leiterplatte (4) umspritzt ist.

15. Elektromotor nach mindestens einem der vorangegangenen Ansprüche,
**dadurch gekennzeichnet, dass**
mittels der den radial ausgerichteten Magnet aufnehmenden Schraube (1) auch ein Polrad mit der Rotorwelle verbunden ist, wobei am Umfang des Polrades abwechselnd orientierte Dauermagnete vorgesehen sind, deren Feld mit auf der Leiterplatte (4) entsprechend angeordneten Sensoren, insbesondere Hallsensoren und/oder Wiegandsensoren, detektierbar ist.

## Claims

1. Electric motor having an angle sensor,
wherein the rotor shaft of the electric motor is mounted via at least two bearings,
wherein a first bearing is configured as a fixed bearing, wherein a radially oriented permanent magnet (3) is provided at the axial end of the rotor shaft that is closer to the fixed bearing,
wherein a printed circuit board (4) is provided on the bearing shield of the fixed bearing, and sensors are provided on the printed circuit board for detecting the magnetic field of the magnet,
wherein signal electronics for evaluating the signals of the sensors and determining the angular position of the rotor shaft and of the magnet are also arranged on the printed circuit board (4),
wherein the magnet is provided in a screw (1) which is screwed into the rotor shaft,
wherein the printed circuit board (4) is kept pressed in the direction of the rotor shaft by a spring element (15), wherein the printed circuit board (4) is provided in a manner pressed against a spacer ring (5), in particular a spacer ring (5) bearing against a shoulder or bead (12), or against a shoulder or bead (12) of the bearing shield,
wherein the spring element (15) is supported against a securing ring (8), which is fastened in the bearing shield.

2. Electric motor according to claim 1,
**characterized in that**
a second bearing is configured as a floating bearing.

3. Electric motor according to at least one of the preceding claims,
**characterized in that**
the centre of gravity of the magnet is provided on the mathematical axis of the rotor shaft.

4. Electric motor according to at least one of the preceding claims,
**characterized in that**
the sensors comprise at least one Hall sensor and/or Wiegand sensor.

5. Electric motor according to claim 4,
**characterized in that**
the screw (1), which is screwed into the rotor shaft and in which the magnet is provided, is secured against a spacer washer (2) by a locknut for adjusting and setting the gap between the magnet and the Hall sensor and/or Wiegand sensor.

6. Electric motor according to at least one of the preceding claims,
**characterized in that**
the screw (1) is a plastic screw or a steel screw.

7. Electric motor according to at least one of the preceding claims,
**characterized in that**
the printed circuit board (4) is configured as a circular disc.

8. Electric motor according to at least one of the preceding claims,
**characterized in that**
an edge region of the printed circuit board (4) is unpopulated and is configured without conductor tracks so as to achieve a large insulating gap between the bearing shield and the signal electronics of the printed circuit board (4).

9. Electric motor according to at least one of the preceding claims,
**characterized in that**
such a large area at the edge of the printed circuit board (4) is unpopulated and is configured without conductor tracks that the signal electronics can be operated at a potential which has a potential difference with respect to the bearing shield that substantially corresponds to the DC link voltage of the mains-powered inverter that powers the electric motor.

10. Electric motor according to at least one of the preceding claims,
**characterized in that**
the printed circuit board (4) is connected, in particular screwed, to an intermediate ring part, in particular to a metal intermediate part, in particular wherein the printed circuit board (4) has no conductor tracks in the surface area at which the intermediate ring part makes contact with the printed circuit board (4).

11. Electric motor according to claim 10,
**characterized in that**
the intermediate ring part is screw-connected to the bearing shield of the electric motor.

12. Electric motor according to claim 10 or 11,
**characterized in that**
a housing cover can be screw-connected to the bearing shield of the electric motor, said housing cover covering the printed circuit board (4) and the intermediate ring part against the environment in such a way as to form a housing.

13. Electric motor according to at least one of the preceding claims,
**characterized in that**
an insulating film, in particular polyester, polyamide film or the like, is provided between the sensor and the rotatably mounted permanent magnet so as to increase the insulating gap.

14. Electric motor according to claim 13,
**characterized in that**
the film is overmoulded together with the sensor and the printed circuit board (4).

15. Electric motor according to at least one of the preceding claims,
**characterized in that**
a pole wheel is also connected to the rotor shaft by means of the screw (1) accommodating the radially oriented magnet, wherein alternately oriented permanent magnets are provided on the circumference of the pole wheel, the field of which permanent magnets can be detected by sensors, in particular Hall sensors and/or Wiegand sensors, which are correspondingly arranged on the printed circuit board (4).

## Revendications

1. Moteur électrique équipé d'un capteur angulaire,
l'arbre rotorique dudit moteur électrique étant monté par l'intermédiaire d'au moins deux paliers,
un premier palier étant réalisé en tant que palier fixe,
un aimant permanent (3), orienté radialement, étant prévu à l'extrémité axiale dudit arbre rotorique la plus rapprochée dudit palier fixe,
une plaquette imprimée (4), sur laquelle des capteurs sont prévus pour détecter le champ magnétique de l'aimant, étant prévue sur le bouclier dudit palier fixe,
une électronique de signaux étant également implantée sur ladite plaquette imprimée (4), en vue d'évaluer les signaux des capteurs et de déterminer la position angulaire de l'arbre rotorique et de l'aimant,
lequel aimant est prévu dans une vis (1) vissée dans ledit arbre rotorique,
la plaquette imprimée (4) étant maintenue, par un élément élastique (15), pressée fermement en direction dudit arbre rotorique, ladite plaquette imprimée (4) étant prévue pour être pressée fermement contre une bague d'espacement (5), notamment une bague d'espacement (5) reposant sur un décrochement ou un bourrelet (12), ou contre un décrochement ou un bourrelet (12) du bouclier de palier,
ledit élément élastique (15) étant en appui contre une bague d'arrêt (8) fixée dans ledit bouclier de palier.

2. Moteur électrique selon la revendication 1,
**caractérisé par le fait**
**qu'**un second palier est réalisé en tant que palier flottant.

3. Moteur électrique selon au moins l'une des revendications précédentes,
**caractérisé par le fait que**
le centre de gravité de l'aimant est prévu sur l'axe mathématique de l'arbre rotorique.

4. Moteur électrique selon au moins l'une des revendications précédentes,
**caractérisé par le fait que**
les capteurs incluent au moins un capteur à effet Hall et/ou un capteur de Wiegand.

5. Moteur électrique selon la revendication 4,
**caractérisé par le fait que**
la vis (1) vissée dans l'arbre rotorique, dans laquelle l'aimant est prévu, est bloquée à demeure contre un disque d'espacement (2), à l'aide d'un contre-écrou, en vue de régler et de consigner la distance comprise entre ledit aimant et le capteur à effet Hall et/ou le capteur de Wiegand.

6. Moteur électrique selon au moins l'une des revendications précédentes,
**caractérisé par le fait que**
la vis (1) est une vis en matière plastique ou une vis en acier.

7. Moteur électrique selon au moins l'une des revendications précédentes, **caractérisé par le fait que**
la plaquette imprimée (4) est réalisée sous la forme d'un disque circulaire.

8. Moteur électrique selon au moins l'une des revendications précédentes,
**caractérisé par le fait**
**qu'**une région marginale de la plaquette imprimée (4) est de réalisation non garnie et dépourvue de pistes conductrices, en vue d'obtenir un fort espacement d'isolation entre le bouclier de palier et l'électronique de signaux de ladite plaquette imprimée (4).

9. Moteur électrique selon au moins l'une des revendications précédentes,
**caractérisé par le fait**
**qu'**une région de réalisation non garnie et dépourvue de pistes conductrices, sur le bord de la plaquette imprimée (4), présente un dimensionnement tel que l'électronique de signaux puisse être mise en fonction à un potentiel présentant, par rapport au bouclier de palier, une différence de potentiel correspondant, pour l'essentiel, à la tension de circuit intermédiaire du convertisseur alimenté par le réseau et alimentant ledit moteur électrique.

10. Moteur électrique selon au moins l'une des revendications précédentes,
**caractérisé par le fait que**
la plaquette imprimée (4) est reliée, en particulier vissée à une pièce annulaire intercalaire, en particulier une pièce intercalaire en métal, sachant notamment que ladite plaquette imprimée (4) est dépourvue de pistes conductrices dans la zone de la surface dans laquelle ladite pièce annulaire intercalaire est en contact avec ladite plaquette imprimée (4).

11. Moteur électrique selon la revendication 10,
**caractérisé par le fait que**
la pièce annulaire intercalaire est reliée par vissage au bouclier de palier dudit moteur électrique.

12. Moteur électrique selon la revendication 10 ou 11,
**caractérisé par le fait**
**qu'**un couvercle de carter peut être relié, par vissage, au bouclier de palier dudit moteur électrique qui recouvre la plaquette imprimée (4) et la pièce annulaire intercalaire vis-à-vis de l'espace environnant, avec formation d'une enceinte.

13. Moteur électrique selon au moins l'une des revendications précédentes,
**caractérisé par le fait**
**qu'**un film isolant, en particulier un film de polyester, de polyamide ou d'une matière similaire, est prévu entre le capteur et l'aimant permanent monté à rotation, de manière à accroître l'espacement d'isolation.

14. Moteur électrique selon la revendication 13,
**caractérisé par le fait que**
le film est enrobé par injection, conjointement au capteur et à la plaquette imprimée (4).

15. Moteur électrique selon au moins l'une des revendications précédentes,
**caractérisé par le fait**
**qu'**une roue polaire est également reliée à l'arbre rotorique au moyen de la vis (1) recevant l'aimant pointant dans le sens radial, le pourtour de ladite roue polaire étant pourvu d'aimants permanents qui sont orientés en alternance et dont le champ peut être détecté à l'aide de capteurs, en particulier des capteurs à effet Hall et/ou des capteurs de Wiegand disposés de façon correspondante sur la plaquette imprimée (4).
